# EUROPEAN PATENT APPLICATION

(11) **EP 2 447 230 A2**
(43) Date of publication of application: **02.05.2012**
(21) Application number: 10792334.4
(22) Date of filing: 23.06.2010
(51) Int. Cl.: C04B 16/06, D02G 3/22, D02G 3/44

(54) **REINFORCING FIBER AND SHOTCRETE COMPOSITION COMPRISING SAME**

(30) Priority: 23.06.2009 KR 20090055714; 21.10.2009 KR 20090100169; 28.10.2009 KR 20090102634; 30.12.2009 KR 20090133487; 12.03.2010 KR 20100022482; 02.04.2010 KR 20100030541; 23.06.2010 KR 20100059637
(71) Applicant: Kolon Construction Co., Ltd, Kyunggi-do 427-040 (KR); Kolon Fashion Material, Inc., Kyunggi-do 427-040 (KR)
(72) Inventor: JEON, Joong Kyu, Seoul 130-730 (KR); KIM, Kyoung Chul, Daegu 706-040 (KR); LEE, Dong-Eun, Gumi-si Gyeongsangbuk-do 730-080 (KR); LEE, Jun Gyu, Gumi-si Gyeongsangbuk-do 730-320 (KR)
(74) Representative: Betten & Resch
(86) International application number: PCT/KR2010/004088
(87) International publication number: WO 2010/151052

(57) **Abstract**

This invention relates to a reinforcing fiber and to a shotcrete composition including the same, and particularly to a reinforcing fiber and to a shotcrete composition including the same, wherein the fiber has an improved shape and a coated surface to enhance dispersibility in a cement paste, and the force of attachment of the fiber is improved to facilitate the construction of a structure such as a tunnel or the like, and the low rebound rate and enhanced dispersibility of the fiber contribute to the construction of a dense and strong structure, and the fiber of this invention provides a structure having excellent durability including flexural toughness or the like.

## Description

### Technical Field

The present invention relates to a reinforcing fiber and a shotcrete composition comprising the same, and more particularly to a reinforcing fiber, wherein the fiber has an improved shape and a coated surface, so that the dispersibility in a cement paste of the fiber is enhanced, and the force of attachment of the fiber is improved to facilitate the construction of a structure such as a tunnel or the like, and the low rebound rate and enhanced dispersibility of the fiber contribute to the construction of a dense and strong structure, and the fiber may provide a structure having excellent durability including flexural toughness or the like, and to a shotcrete composition comprising the same.

### Background Art

A cement hardener including concrete, mortar, and shotcrete (hereinafter referred to as "cement hardener") has been widely used as a profitable construction material, but has low tensile strength and poor toughness.

As a reinforcing material for improving the toughness of the cement hardener, reinforcing bars have been utilized for about 100 years. Recently, instead of the reinforcing bars, a steel-based reinforcing material such as a steel plate, a pipe steel fiber, etc., is typically used.

Steel fibers such as bar remnants, having a thickness of about 0.5 mm and a length of about 30 mm, are advantageous because of higher force of attachment to the cement hardener and higher fracture strength, compared to the conventional reinforcing bars, and also because it is easy to apply such fibers to tunnel and dam construction to which reinforcing bars and meshes are difficult to mount. However, upon use in for example a tunnel construction site wherein a large amount of moisture is present, steel fibers may easily corrode, and are expensive and have high specific gravity which undesirably decreases dispersibility in the cement hardener and increases the load of the cement hardener. Upon tunnel construction, a grouting layer is formed to strengthen a tunnel excavation face, and shotcrete which is a cement hardener is sprayed to prevent water from leaking from the inner periphery of the grouting layer, thus forming a shotcrete layer. In the case where shotcrete is sprayed in the form of a mixture including steel fibers to form the shotcrete layer, the steel fibers have low dispersibility in the shotcrete undesirably clogging a nozzle, making it difficult to perform spraying. In order to prevent such clogging, the shotcrete is mixed and sprayed under the condition of the slump thereof being set to 120 mm or more, and thereby the rebound may increase because of the specific gravity of the steel fibers, undesirably exposing the steel fibers to the outside of the shotcrete layer and obtaining the undesired strength of the shotcrete.

With the goal of solving such conventional problems, methods of using synthetic fibers as a cement hardener reinforcing material in lieu of the steel-based reinforcing material such as steel fibers or the like are recently being actively studied as disclosed in US Patent No. 5, 749, 961 and Korean Unexamined Patent Publication No. 2003-47669.

Compared to the steel fibers, synthetic fibers have a smaller specific gravity, and their corrosion resistance is superior and they may further reinforce the crack resistance of a cement hardener.

However, it is known that synthetic fibers do not improve fundamental structural performance such as bending strength or flexural toughness of a cement hardener and are only effective at preventing the cracking of the cement hardener.

Also in the case where it is intended that the synthetic fibers increase the fundamental structural performance of the cement hardener, an increased amount of the synthetic fibers should be used. However, when more synthetic fibers are used, it is difficult to disperse such fibers in the cement hardener, undesirably deteriorating properties of the cement hardener such as compressive strength, bending strength, etc., and reducing the attachability to the cement hardener.

### Disclosure

### Technical Problem

Accordingly, the present invention is intended to provide a reinforcing fiber and a shotcrete composition comprising the same, wherein the reinforcing fiber may improve structural performance including bending strength, flexural toughness, etc. of a cement hardener, particularly, shotcrete, and may have high dispersibility and attachability in a cement paste and the construction thereof is easy.

### Technical Solution

In order to accomplish the above object, the present invention provides a reinforcing fiber, comprising a plurality of filaments and having attachment parts that are provided at both ends thereof and have a shape wherein the filaments are loosened and dispersed. The reinforcing fiber may comprise a linear part and an outer peripheral part, composed of the plurality of filaments, and may be configured such that loops are formed on the surface thereof via air interlacing of the linear part and the outer peripheral part or such that the outer peripheral part is woven thus exhibiting superior dispersibility and attachability.

In addition, the present invention provides a shotcrete composition comprising the above reinforcing fiber, comprising, based on the unit volume of shotcrete, 300 ∼ 600 kg/m³ of a binder including cement; 180 ∼ 240 kg/m³ of water; 800 ∼ 1200 kg/m³ of fine aggregate; and 400 - 700 kg/m³ of coarse aggregate.

### Advantageous Effects

According to the present invention, a reinforcing fiber is superior in dispersibility and attachability in a cement paste because of the structural shape including loops or the like formed by air interlacing.

Also according to the present invention, a shotcrete composition including the reinforcing fiber is effective at providing a structure having high compressive strength, tensile strength, bending strength and flexural toughness.

Also the shotcrete composition including the reinforcing fiber according to the present invention can exhibit high dispersibility because no agglomeration occurs based on the structural shape and the material of the reinforcing fiber, and also, a nozzle can be prevented from being clogged even when the slump is low, and the rebound rate can be decreased, resulting in superior constructability and profitability.

### Description of Drawings

FIG. 1 is a schematic view showing a reinforcing fiber according to an embodiment of the present invention;
FIG. 2 is a perspective view schematically showing air interlacing of the fiber having a double configuration of FIG. 1;
FIG. 3 is an exploded perspective view showing a reinforcing fiber according to another embodiment of the present invention;
FIG. 4 is a schematic view showing the spraying of a shotcrete composition including the reinforcing fibers according to the present invention;
FIG. 5 is a schematic view showing a shotcrete composition including single fibers and the reinforcing fibers;
FIG. 6 is a schematic view showing a shotcrete composition including steel fibers and the reinforcing fibers;
FIG. 7 is a graph showing the results of testing compressive strength of examples according to the present invention and comparative examples;
FIG. 8 is a graph showing the results of testing tensile strength of the examples according to the present invention and the comparative examples;
FIG. 9 is a graph showing the results of testing bending strength of the examples according to the present invention and the comparative examples;
FIG. 10 is a graph showing the results of testing the toughness quotient of the examples according to the present invention and the comparative examples;
FIG. 11 is a graph showing the results of testing the bending strength of the examples according to the present invention depending on the amount of added fiber; and
FIG. 12 is a graph showing the results of testing the toughness quotient of the examples according to the present invention depending on the amount of added fiber.

### Best Mode

Hereinafter, the construction and the effects of the present invention are more specifically described based on the appended drawings. In the description of the present invention, the terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept implied by the term to best describe the method he or she knows for carrying out the invention.

Below is a detailed description of the present invention with reference to the appended drawings.

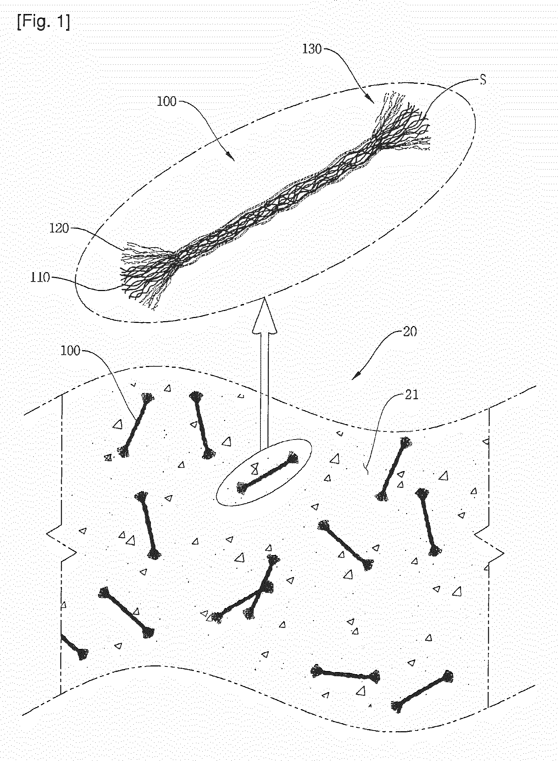

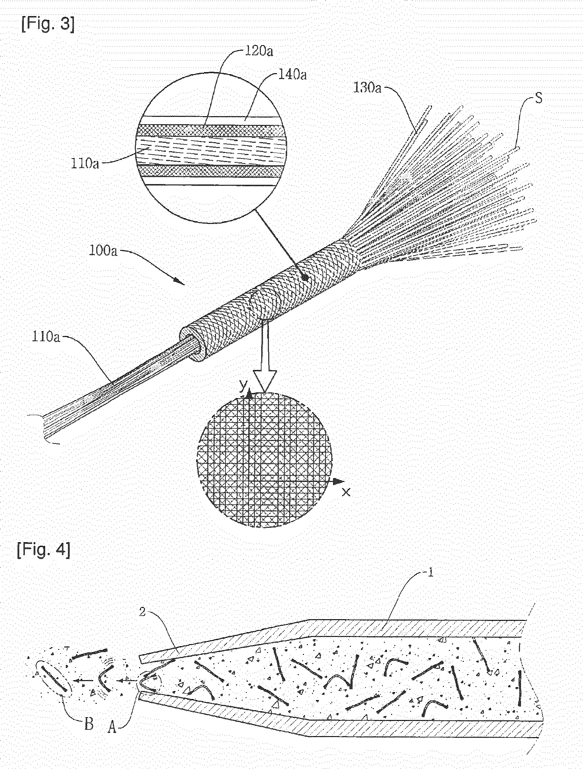

As shown in FIGS. 1 and 3, a reinforcing fiber according to the present invention comprises a plurality of filaments S and has attachment parts 130, 130a which are provided at both ends thereof and have a shape wherein the filaments are loosened and dispersed. Thus, the force of attachment to a cement paste 21 may be enhanced by the attachment parts 130, 130a, thereby increasing the durability of a structure 20 including the reinforcing fiber according to the present invention.

According to two embodiments of the present invention, two types of reinforcing fibers 100, 100a are provided, comprising a linear part 110, 110a having a plurality of filaments S at the center thereof, an outer peripheral part 120, 120a formed with a plurality of filaments S around the linear part 110, 110a, and attachment parts 130, 130a provided at both ends of the linear part 110, 110a and the outer peripheral part 120, 120a and having a shape wherein the filaments S are loosened and dispersed.

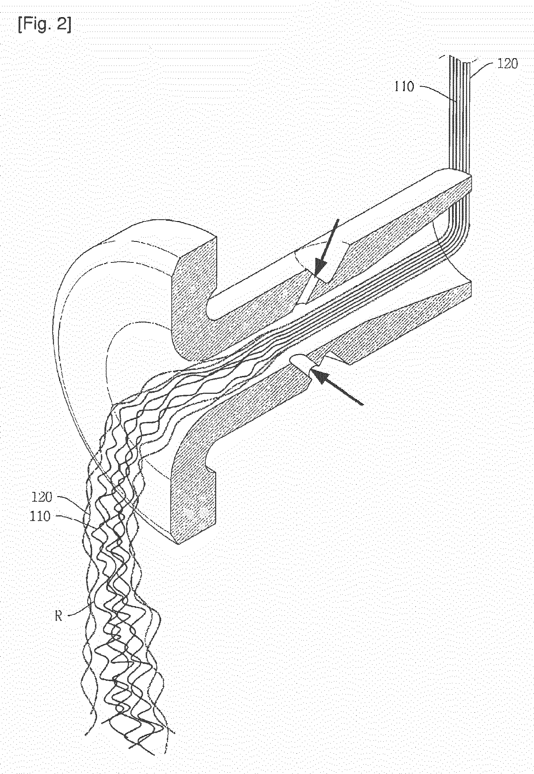

According to a first embodiment, the reinforcing fiber 100 comprises, as shown in FIG. 1, the linear part 110 having the plurality of filaments, the outer peripheral part 120 therearound, and attachment parts 130 at both ends thereof, and the linear part 110 and the outer peripheral part 120 are configured such that, as shown in FIG. 2, the linear part 110 and the outer peripheral part 120, formed with the plurality of filaments S, are air interlaced with each other so that the filaments S are interlaced. The fiber 100 thus manufactured has a plurality of loops R on the surface thereof, and such loops R function to enhance the performance with which it is attached to the cement paste 21, which will be described later.

Although not shown in the drawing, air interlacing the linear part 110 and the outer peripheral part 120 may be performed by randomly interlacing the linear part 110 and the outer peripheral part 120, or may be performed by separately interlacing the linear part 110 and the outer peripheral part 120 as shown in FIG. 1.

As such, the term "air interlacing" means that, as shown in FIG. 2, the filaments S are interlaced by feeding a base body comprising the linear part 110 and the outer peripheral part 120, composed of the plurality of filaments S, into an air interlacing device and spraying high-pressure air thereto.

Meanwhile, when the reinforcing fiber 100 according to the present invention has 100 ∼ 1,000,000 loops R having a size of 0.01 ∼ 2 mm on the surface thereof per the length of a reinforcing fiber of 1 m, attachability and dispersibility becomes more favourable.

The filaments of the reinforcing fiber 100 may include but are not limited to polyamide fibers, polypropylene fibers, polyvinylalcohol fibers, polyester fibers, lyocell fibers, rayon fibers, polyacrylic fibers, polyolefin fibers, polyvinylchloride fibers, wholly aromatic polyamide fibers, carbon fibers or mixtures thereof.

The reason why the filaments of various materials may be applied is that even in the case of polypropylene fibers having very low attaching performance, a large number of loops may be formed on the surface of the fibers by means of air interlacing to thus improve frictional properties thereby enhancing the force of attachment to the cement paste. Specifically, filaments of a material which is inexpensive but has low attaching performance are air interlaced to form loops, whereby the performance with which the filaments are attached to the cement paste may be enhanced.

Also, polypropylene fibers having low attachability but being inexpensive and having low specific gravity and a low melting point, and polyvinylalcohol fibers having high attachability but being expensive making it difficult to bring into a widespread use, are interlaced with each other, thus obtaining reinforcing fibers having superior attachability while decreasing the price. In addition, air interlacing a combination with the filaments such as polyamide or polyaramide is possible. Although not shown in the drawing, when the filaments of various materials are air interlaced in this way, the linear part 110 and the outer peripheral part 120 may be randomly interlaced thus forming the reinforcing fiber having superior attachability while generating economic benefits.

In the case where the reinforcing fiber 100 according to the present invention is provided in the form of the linear part 110 and the outer peripheral part 120 being separately formed as shown in FIG. 1, the linear part 110 preferably includes filaments S having high strength such as high-strength yarns including polyaramide, high-strength polyethylene, carbon fibers, etc., thus improving strength and flexibility, and the outer peripheral part 120 preferably includes hydrophilic yarns such as polyvinylalcohol or polyamide so as to achieve the attachment to the cement paste 21. When the hydrophilic yarns are used in this way, the force of attachment to the cement paste 21 may be increased by hydrogen bonds thus supplementing the durability of the structure 20.

In the reinforcing fiber 100 formed via interlacing, when the linear part 110 and the outer peripheral part 120 are randomly interlaced with each other, inexpensive filaments and comparatively expensive filaments having superior attachability are used in a mixture form, thus generating economic benefits and enhancing attaching performance. Also when the linear part 110 and the outer peripheral part 120 are separately interlaced, filaments of different materials can be used for the linear part 110 and the outer peripheral part 120 to enhance the strength, flexibility and attachability. Depending on the end uses, selective use as mentioned above is possible.

The monofineness of the filaments to be manufactured in air interlaced form is 0.5 ∼ 10 deniers, and the total fineness of the reinforcing fiber may be 100 ∼ 5,000 deniers. However, the case where the monofineness is low is favorable. In the case where the monofineness is too thick, the degree of interlacing may become slack, and the interlaced condition of filaments may be easily released upon mixing.

According to a second embodiment as shown in FIG. 3, the reinforcing fiber 100a is provided, which comprises a linear part 100a composed of a plurality of filaments S, and an outer peripheral part 120a composed of a plurality of filaments S in woven form around the linear part 100a. The outer peripheral part 120a is formed by weaving the plurality of filaments S in a multi-direction so that the tensile strength is reinforced in the multi-direction while linearity is maintained by the linear part 110a.

As shown in FIG. 3, the outer peripheral part 120a is formed by weaving the plurality of filaments S in four directions including a circumferential direction (X axis direction and an axial direction (Y axis direction) of the reinforcing fiber, and diagonal directions between the circumferential direction and the axial direction. When the filaments are woven in the multi-direction in this way to form the outer peripheral part 120a, the resulting fiber 100a is strengthened not only in the axial direction but also in the circumferential and diagonal directions, thereby enhancing resistance performance when exposed to an external force in the multi-direction. Also the outer peripheral part 120a is formed by weaving the plurality of filaments S in the multi-direction, whereby irregularities are formed on the surface of the outer peripheral part 120a thus enhancing the force of attachment to the cement paste 21, so that the strength of the structure 20 is reinforced.

The linear part 100, 100a is formed by the plurality of filaments S, and functions to maintain the shape (linearity) of the reinforcing fiber 100, 100a while being seated in the outer peripheral part 120, 120a. Hence, the linear part 110, 110a may prevent dispersibility from decreasing as a result of agglomeration in the fiber 100, 100a. Also, when linearity is maintained in the cement paste 21 by the linear part 110, 110a, the tensile strength of the structure 20 is reinforced.

Particularly according to the present invention, the attachment parts 130, 130a are provided in a shape wherein the filaments S of the linear part 110, 110a and the outer peripheral part 120, 120a are loosened and dispersed so as to enhance the force of attachment to the cement paste 21. The attachment parts 130, 130a may be formed during the mixing procedure so that their diameter increases throughout the mixing procedure, during which time the cement particles of the cement paste 21 loosen the attachment between the filaments S that form each of both ends of the linear part 110, 110a and the outer peripheral part 120, 120a when in a state of only the linear part 110, 110a and the outer peripheral part 120, 120a having been formed. Alternatively, the attachment parts 130, 130a may be formed before mixing so that the diameter thereof increases as a result of cutting a base body composed exclusively of the linear part 110, 110a and the outer peripheral part 120, 120a while vibrating it at a slow rate so that the attachment of the filaments S at both ends of the reinforcing fiber 100, 100a may become loose. When the attachment parts 130, 130a are formed in this way, spaces are formed by loosening the attachment between the filaments S and these may be filled with cement thus enhancing the binding force between the reinforcing fiber 100, 100a and the cement paste 21.

In the formation of the attachment parts 130, 130a, the filaments S of the linear part 110, 110a and the outer peripheral part 120, 120a of the fiber may be manufactured in a non-attaching manner. When respective filaments S are formed in a non-attaching manner in this way, the formation of the attachment parts 130, 130a is facilitated. Even when the filaments S are formed in such a non-attaching manner, frictional force may act on respective filaments S and the force of attachment may thus occur to some extent but there is no problem in terms of maintaining the shape of the reinforcing fiber 100, 100a.

As shown in FIG. 3, the outer peripheral part 120a may be coated with a coating layer 140a comprising a polyalcoholic ester lubricant, a non-ionic surfactant and an antistatic agent. When the coating layer 140 is applied on the surface of the outer peripheral part 120a in this way, the dispersibility of the fiber 100a in the cement paste 21 is greatly increased.

Preferably in the present invention, the coating layer 140a may be formed by applying a mixture comprising 40 ∼ 50 wt% of the polyalcoholic ester lubricant, 30 ∼ 40 wt% of the non-ionic surfactant and 10 ∼ 30 wt% of the antistatic agent.

The amount of the coating layer 140a is preferably 0.5 ∼ 3 wt% based on the total weight of the fiber 100a. If the amount thereof falls outside the above range, improvements in dispersibility and attachability may decrease.

Although the coating layer 140a is illustrated only on the outer peripheral part 120a of the reinforcing fiber 100a shown in FIG. 3, the coating layer may be formed even on the reinforcing fiber 100 according to the first embodiment.

In addition the present invention provides a shotcrete composition comprising a binder including cement, water, fine aggregate, coarse aggregate, and the above reinforcing fiber. The fracture of shotcrete typically incorporates fibers as fracture of the face of attachment occurs between the fiber and the cement paste. Thus, in order to enhance attachability, the present invention provides a composition in which the fiber that is used has a coating layer added by chemical surface treatment (coating) and loops formed by air interlacing using a dynamic method (surface indenting, notching), whereby the interfacial attachability between the fiber and the cement paste may be enhanced and simultaneously the dispersibility in shotcrete may be enhanced.

As shown in FIG. 1, the shotcrete composition according to the present invention comprises the reinforcing fibers as above and a cement paste 21 comprising water, cement, fine aggregate and coarse aggregate so as to form a structure 20 including a shotcrete layer or the like of a tunnel.

The shotcrete composition according to the present invention includes 300 ∼ 600 kg/m³ of the binder including cement based on the unit volume of shotcrete. The amount of the binder is preferably 300 kg/m³ or more in terms of exhibiting strength, and is preferably 600 kg/m³ or less in terms of profitability and flowability.

The composition according to the present invention includes 180 ∼ 240 kg/m³ of water based on the unit volume of shotcrete, and the amount of water may be selectively adjusted in the optimal range in terms of strength and flowability.

In the present invention, the amount of the fine aggregate is 800 ∼ 1200 kg/m³ based on the unit volume of shotcrete, and the amount of the fine aggregate is properly limited to the above range in terms of flowability and a reduction in material separation. Also, the amount of the coarse aggregate is preferably 400 ∼ 700 kg/m³ based on the unit volume of the shotcrete in terms of flowability and a reduction in material separation.

Particularly in the present invention, the amount of the reinforcing fiber is preferably set to 1.0% or less but more than 0.5% based on the unit volume of shotcrete. If the amount of the fiber is 0.5% or less based on the unit volume of shotcrete, the toughness quotient according to the tunnel design standards and the standard specifications of the Korea Expressway Corporation which will be described later are not satisfied, and furthermore, it is difficult to control cracking. In contrast, if the amount of the fiber exceeds 1.0%, upon spraying shotcrete, agglomeration may occur which undesirably decreases dispersibility and obtains poor strength.

In the course of mixing the shotcrete composition according to the present invention, the slump of the shotcrete is preferably set to 80 ∼ 120 mm, and more preferably 80 mm. As described in the conventional technique, in the case where shotcrete is formed by adding conventional steel fibers, the slump is set to 120 mm or more because of agglomeration and nozzle clogging problems. However, if the slump is increased in this way, the strength of the shotcrete may decrease and viscosity may also be reduced, thus increasing the rebound rate, undesirably resulting in deteriorated durability of a structure such as for example a tunnel. However, in the present invention, the reinforcing fiber 100, 100a is added to form shotcrete and thus as shown in FIG. 4, the nozzle 2 of a spraying device 1 does not get clogged because of elasticity of the reinforcing fiber 100, 100a. Even when the slump of the shotcrete is set to 80 mm which is typical, the nozzle 2 may not clog owing to good dispersibility of the reinforcing fiber, and furthermore, the rebound rate is decreased based on the viscosity and material of the fiber and consequently durability of a structure such as for example a tunnel is increased. As shown in FIG. 4, the reinforcing fiber 100 sprayed from the nozzle 2 is flexibly curved (portion A) thus preventing the nozzle 2 from being clogged by the agglomeration. After sprayed from the nozzle 2, the linearity of the fiber 100 having a double configuration is maintained by the linear part 110 which will be described later, thus contributing to the strength and crack resistance of the shotcrete. In the reinforcing fiber 100, the linear part 110 is formed of a plurality of filaments S such as high-strength yarns including polyaramide, high-strength polyethylene, carbon fibers, etc., whereby the fiber may become flexible in the shotcrete.

The diameter of the reinforcing fiber 100, 100a may be set to 0.02 - 10 mem, and is preferably limited to 0.2 ∼ 0.6 mm. If the diameter thereof is less than 0.2 mm, there is no great difference from monofilaments, and a plurality of filaments cannot be used upon air interlacing, making it difficult to manufacture the corresponding fiber and for them to exhibit structural performance in shotcrete because of their low tensile strength. In contrast, if the diameter thereof exceeds 0.6 mm, it is difficult to perform air interlacing and the fiber becomes structurally poor because the double layer is formed in the cement paste.

Also the length of the reinforcing fiber 100, 100a is preferably limited to 10 ∼ 200 mm. If the length thereof is less than 10 mm, the reinforcing fiber 100, 100a may be insignificant in terms of exhibiting strength and controlling the cracking in shotcrete, and the interlaced condition of all of the reinforcing fibers 100, 100a may be released in the shotcrete and thus the double configuration of the fibers may not be maintained, undesirably causing problems. In contrast, if the length of the reinforcing fiber 100, 100a exceeds 200 mm, the reinforcing fibers 100, 100a may agglomerate, thus decreasing dispersibility and clogging the nozzle.

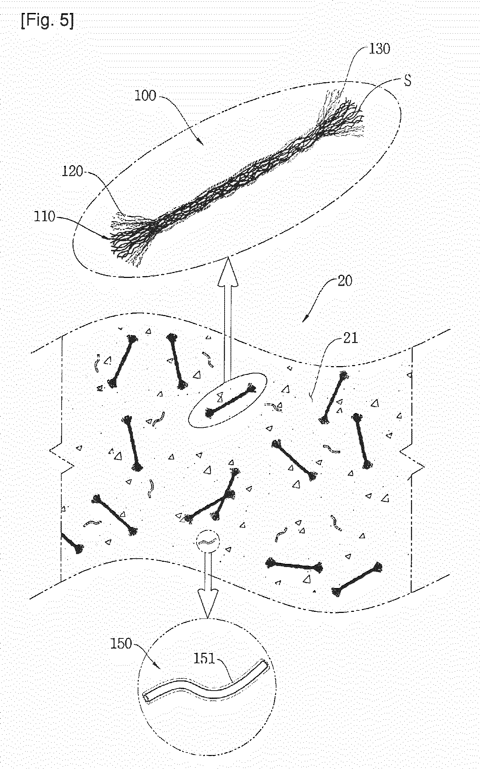

According to the embodiment shown in FIG. 5, upon forming the shotcrete composition, the cement paste 21 comprising water, the binder including cement, fine aggregate and coarse aggregate includes the reinforcing fibers 100, and additionally includes single fibers 150.

As shown in FIG. 5, the surface of the single fibers 150 used in the present embodiment is coated with a coating layer 151 comprising a polyalcoholic ester lubricant, a non-ionic surfactant and an antistatic agent so that dispersibility is improved in the cement paste 21.

The single fibers 150 may be formed of a variety of materials and preferably hydrophilic monofilamnets such as polyamide or the like or a plurality of filaments may be used.

In the case where the single fibers 150 are long, they may easily agglomerate, and so the single fibers 150 should be formed to be shorter than the reinforcing fibers 100.

The shape of the long reinforcing fibers 100 in the cement paste 21 is maintained by the linear part 110, so that agglomeration does not occur, and the strength of the structure 20 is reinforced and the force of attachment to the cement paste 21 is enhanced by the outer peripheral part 120 and the attachment parts 130. In particular, macro cracking may be controlled in the cement paste 21. Furthermore, the short single fibers 150 have the coating layer 151 formed on the surface thereof to thus enhance dispersibility, and may be prevented from agglomerating because of their comparatively short length, and may control the micro cracking which is not controlled by the reinforcing fibers 100 in the cement paste 21, whereby cracking in a variety of shapes and sizes may be controlled in the structure 20, ultimately improving the durability.

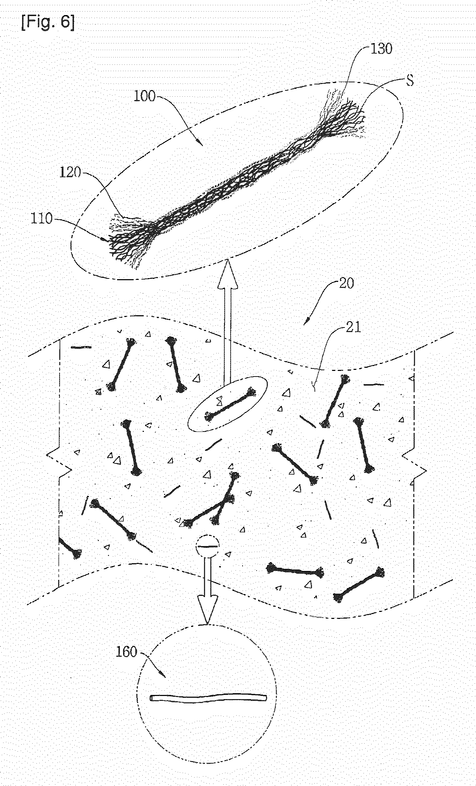

According to anther embodiment, upon formation of the shotcrete composition, the cement paste 21 comprising water, the binder including cement, fine aggregate and coarse aggregate includes the reinforcing fibers 100, and additionally includes steel fibers 160. As shown in FIG. 6, the steel fibers 160 function to further reinforce flexural toughness which is difficult to reinforce in the cement paste 21 when only the reinforcing fiber 100 is used. When the steel fibers 160 are mixed with the reinforcing fibers 100, the problem of a decrease in dispersibility because of the specific gravity of the steel fibers 160 may be solved.

The reinforcing fibers 100 in the cement paste 21 are maintained in shape by the linear part 110 and thus do not agglomerate, and also the strength of the structure 20 is enhanced and the force of attachment to the cement paste 21 is increased by means of the outer peripheral part 120 and the attachment parts 130. In particular, when the force of attachment is enhanced in the cement paste 21, cracking may be controlled. Further, as the steel fibers 160 are partially added, a decrease in dispersibility due to specific gravity may be prevented, and flexural toughness may be enhanced due to rigidness higher than the reinforcing fibers 100, thereby increasing the durability of the structure 20.

FIGS. 5 and 6 illustrate the shotcrete composition using the reinforcing fiber 100, but alternatively the reinforcing fiber 100a may be applied.

The following examples and test examples of the shotcrete composition using the reinforcing fiber 100 according to the present invention will now be described.

### Examples and Test Examples

The mixing ratio and the fiber used in the examples and test examples are shown in Tables 1 and 2 below.

**TABLE 1**

| Types | W/C (%) | S/a (%) | unit weight (kg/m³) | | | | Fiber (%) |
|---|---|---|---|---|---|---|---|
| | | | W | C | S | G | |
| Plain | 44.9 | 65.4 | 211 | 470 | 1054 | 566 | - |
| PA0.5 | 42.9 | 65.0 | 211 | 492 | 1036 | 566 | 0.5 |
| PA0.6 | | | | | | | 0.6 |
| PA0.7 | 42.9 | 64.3 | 218 | 508 | 1004 | 566 | 0.7 |
| PA0.8 | | | | | | | 0.8 |
| S0.5 | 44.9 | 65.4 | 211 | 470 | 1054 | 566 | 0.5 |
| PP0.5 | 42.9 | 65.0 | 211 | 492 | 1036 | 566 | 1.0 |

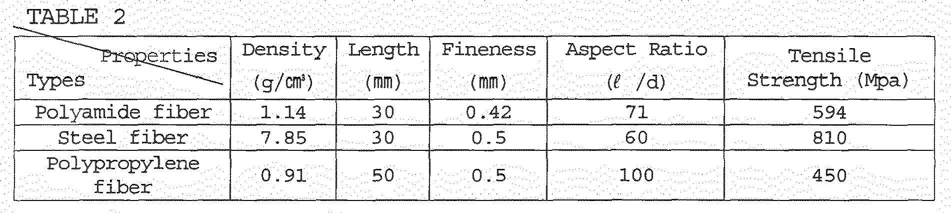

As is apparent from Table 1, Plain is a comparative example using no fiber, PA0.5 to PA0.8 are examples according to the present invention using the reinforcing fiber in different amounts (0.6 ∼ 0.80), S0.5 is another comparative example using 0.5% of a steel fiber per unit volume, and PP0.5 is a further comparative example using 0.5% of a different fiber per unit volume. The fiber used in the examples according to the present invention includes polyamide fibers shown in Table 2, and the different fiber includes polypropylene fibers. The steel fiber having the properties of Table 2 was applied in the present test.

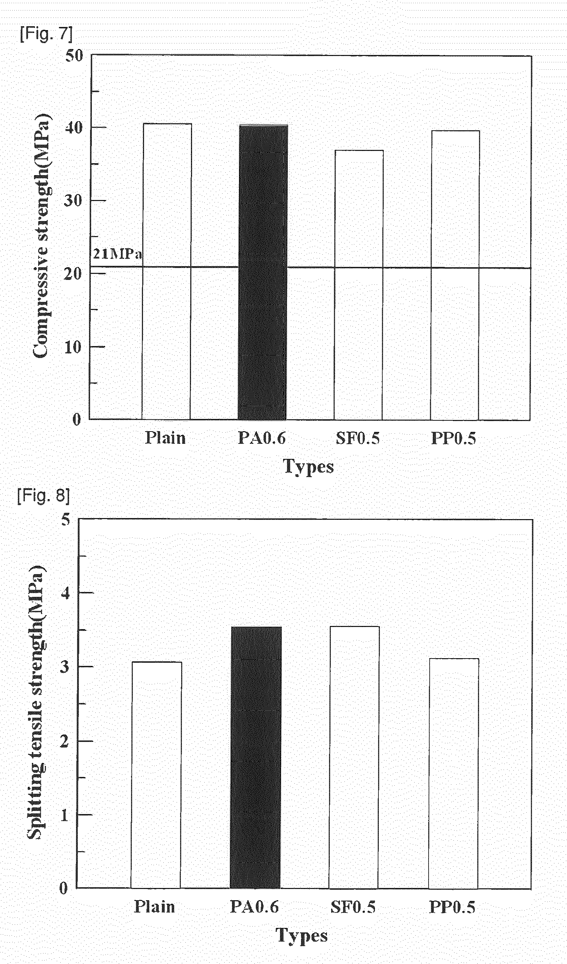

FIG. 7 shows the results of testing the compressive strength of the comparative examples and the examples. In the present test, all of the comparative examples and the examples satisfied 21 MPa after 28 days according to the tunnel design standards. Thus, there are no problems in terms of compressive strength as proposed in the design standards.

FIG. 8 shows the tensile strength of the comparative examples and the examples. Compared to Plain and PP0.5, PA0.6 and SF0.5 had a larger tensile strength. The tensile strengths of the example using the fiber according to the present invention and the comparative example using the steel fiber were superior to the comparative example in which no fiber was used and the comparative example in which the different fiber was used. This is because the reinforcing fiber according to the present invention has almost the same cross-linkage between the fiber and the concrete as does the steel fiber, and greatly contributes to the tensile strength.

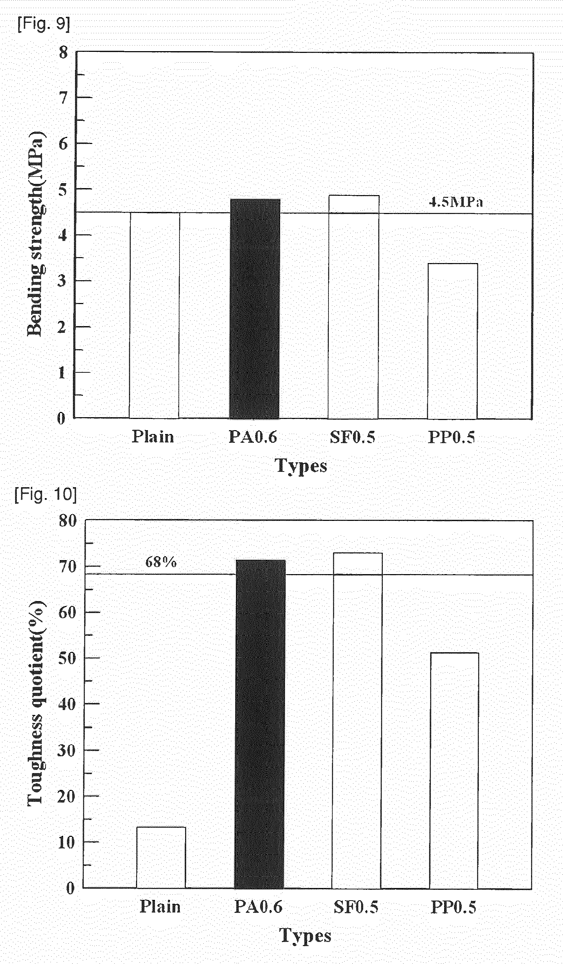

FIGS. 9 and 10 show the bending strength and the toughness quotient of the comparative examples and the examples. According to the tunnel design standards, the bending strength of shotcrete should be 4.5 MPa or more after 28 days and flexural toughness as the toughness quotient should be 3.0 MPa or more, and according to the standard specifications of the Korea Expressway Corporation the toughness quotient should be 68% or greater.

As shown in FIGS. 9 and 10, the examples according to the present invention and the comparative example using the steel fiber satisfied the above standards, and the comparative example using no fiber and the comparative example using the different fiber had results less than the above design standards and the standard specifications. Specifically, the composition according to the present invention includes the reinforcing fiber to thereby enhance dispersibility and attachability so that almost the same bending strength and flexural toughness may be exhibited as in the shotcrete using the steel fiber.

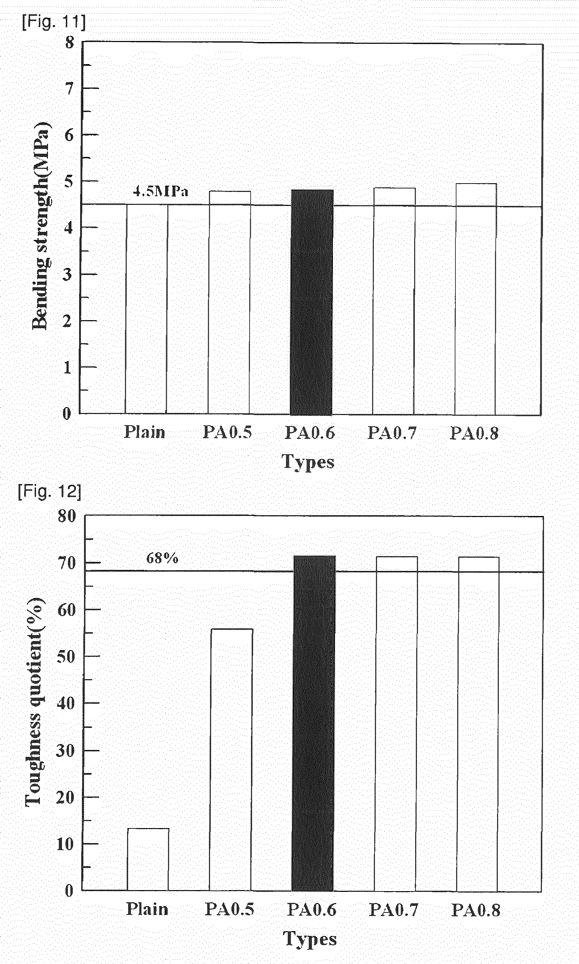

FIGS. 11 and 12 show the bending strength and the toughness quotient of the examples according to the present invention depending on the amount of reinforcing fiber. As shown in FIG. 11, an increase in the bending strength of shotcrete was insignificant in proportion to an increase in the amount of reinforcing fiber. As shown in FIG. 12, all of the examples wherein the fiber having a double configuration was added in an amount of 0.6% or more per unit volume satisfied the bending strength 3.0 MPa according to the tunnel design standards and the toughness quotient 68% according to the standard specifications of the Korea Expressway Corporation. Hence, the appropriate amount of reinforcing fiber in terms of profitability can be determined to be 0.6% per unit volume.

Therefore, the examples according to the present invention and the comparative example using the steel fiber are superior in terms of tensile strength, bending strength and flexural toughness compared to the comparative example using no fiber and the comparative example using the different fiber. In particular, the reinforcing fiber according to the present invention can be seen to contribute to increasing tensile strength, bending strength and flexural toughness in shotcrete to almost the same degree as when using the steel fiber. The reinforcing fiber according to the present invention is incorporated in the shotcrete, and thereby superior dispersibility, decreased rebound rate and corrosion resistance may be obtained, compared to when using the steel fiber, and furthermore, almost the same tensile strength, bending strength and flexural toughness in shotcrete may be attained as in conventional shotcrete using the steel fiber. According to the present invention, durability, constructability, and profitability become much higher compared to conventional cases.

Also in the examples according to the present invention wherein the reinforcing fiber is added in an amount of 0.6% or more per unit volume, they satisfied a bending strength of 3.0 MPa according to the tunnel design standards and an toughness quotient of 68% according to the standard specifications of the Korea Expressway Corporation, and thus the appropriate amount of the reinforcing fiber is 0.6% per unit volume in terms of profitability.

## Claims

1. A reinforcing fiber, comprising a plurality of filaments, and having attachment parts which are provided at both ends thereof and have a shape wherein the filaments are loosened and dispersed.

2. The reinforcing fiber of claim 1, wherein the reinforcing fiber has a double configuration comprising an inner linear part and an outer peripheral part around the linear part.

3. The reinforcing fiber of claim 2, wherein filaments of the linear part comprise a high-strength yarn, and filaments of the outer peripheral part comprise a hydrophilic yarn.

4. The reinforcing fiber of claim 3, wherein the high-strength yarn comprises any one selected from among polyaramide, high-strength polyethylene and carbon fibers, and the hydrophilic yarn comprises polyvinylalcohol or polyamide.

5. The reinforcing fiber of claim 1, wherein the reinforcing fiber has loops formed on a surface thereof by air interlacing.

6. The reinforcing fiber of claim 2, wherein the linear part and the outer peripheral part are air interlaced with each other.

7. The reinforcing fiber of claim 2, wherein the outer peripheral part is formed by weaving a plurality of filaments.

8. The reinforcing fiber of claim 1, wherein a surface of the reinforcing fiber is coated with a coating layer comprising a polyalcoholic ester lubricant, a non-ionic surfactant and an antistatic agent.

9. A shotcrete composition, comprising a binder including cement, water, aggregate and the reinforcing fiber of any one of claims 1 to 8.

10. The shotcrete composition of claim 9. comprising, based on a unit volume of shotcrete, 300 ∼ 600 kg/m³ of the binder including cement; 180 ∼ 240 kg/m³ of water; 800 ∼ 1200 kg/m³ of fine aggregate; and 400 ∼ 700 kg/m³ of coarse aggregate.

11. The shotcrete composition of claim 10, wherein the reinforcing fiber is used in an amount of 1.0% or less but more than 0.5% based on the unit volume of the shotcrete.

12. The shotcrete composition of claim 10, wherein the reinforcing fiber has a diameter of 0.2 ∼ 0.6 mm.

13. The shotcrete composition of claim 10, wherein the reinforcing fiber has a length of 10 - 200 mm.

14. The shotcrete composition of claim 10, wherein the shotcrete composition is mixed so that a slump is 80 ∼ 120 mm.

15. The shotcrete composition of claim 9, further comprising a single fiber composed of multi-filaments or monofilaments.

16. The shotcrete composition of claim 9, further comprising a steel fiber.
